# FASCICULE DE BREVET EUROPEEN

(11) **EP 4 256 997 B1**
(45) Date de publication et mention de la délivrance du brevet: **04.11.2026**
(21) Numéro de dépôt: 23161027.0
(22) Date de dépôt: 09.03.2023
(51) Int. Cl.: A42B 3/12, A42C 2/00

(54) **PROCÉDÉ D'ADAPTATION D'UN CASQUE À LA TÊTE D'UN UTILISATEUR**
VERFAHREN ZUR ANPASSUNG EINES HELMS AN DEN KOPF EINES BENUTZERS
METHOD FOR ADAPTING A HELMET TO THE HEAD OF A USER

(30) Priorité: 07.04.2022 FR 2203179
(43) Date de publication de la demande: 11.10.2023
(73) Titulaire: THALES, 92190 Meudon (FR)
(72) Inventeur: BAUDOU, Joël, 33160 Saint Médard en Jalles (FR); DUMERCQ, Philippe, 33700 Mérignac (FR)
(74) Mandataire: Atout PI Laplace

(56) Documents cités:
- FR-A1- 2 750 578
- FR-A1- 2 896 133
- GB-A- 2 398 476
- US-A1- 2004 163 228
- US-A1- 2018 027 914
- US-A1- 2021 001 560

## Description

### DOMAINE TECHNIQUE

Le domaine technique de la présente invention concerne le domaine des habillages intérieurs pour casques, et en particulier, un procédé de définition et de fabrication d'un habillage intérieur pour casque.

### ARRIÈRE-PLAN

Le positionnement d'un dispositif optronique monté sur un casque devant les yeux d'un utilisateur tel qu'un pilote, est généralement réalisé en utilisant un habillage interne constitué de cales en mousse. L'habillage interne peut être inséré dans un casque de taille standard afin de compenser l'espace entre la tête de l'utilisateur et le casque de protection et afin de régler la position du dispositif optronique devant les yeux de l'utilisateur. Cependant, ce type d'habillage ne permet pas d'ajuster la position du dispositif optronique de façon précise et nécessite un réajustement après quelques heures d'utilisation. De plus, un mauvais ajustement peut provoquer des douleurs dues à des pressions locales.

Alternativement, il est possible de fabriquer un casque personnalisé comprenant le dispositif optronique, le casque étant adapté à la forme et taille de la tête de l'utilisateur. Les casques personnalisés sont en général fabriqués par moulage ou par usinage. Cependant, fabriquer un casque personnalisé est coûteux, demande plusieurs heures de travail et génère une quantité importante de déchets.

US 2004/163228 décrit une procédé d'adaptation d'un casque à la tête d'un utilisateur.

### RÉSUMÉ

Afin de pallier les inconvénients liés aux solutions existantes, l'invention propose un habillage personnalisé qui est adapté à la tête d'un utilisateur et aux dimensions d'un casque standard préexistant. En particulier, l'invention a pour objet un procédé d'adaptation d'un casque standard préexistant à la tête d'un utilisateur, le casque comprenant un dispositif optronique destiné à être placé devant les yeux de l'utilisateur. Le procédé d'adaptation permet la fabrication d'un habillage pour casque améliorant le confort et la précision de la position du dispositif optronique devant les yeux de l'utilisateur.

De plus, certains aspects de l'invention décrite ci-dessous, comme par exemple la fabrication d'un habillage à plat, ou encore la fabrication d'un habillage comprenant différentes portions, ainsi que la flexibilité des portions permet de faciliter la fabrication, réduire le temps de fabrication et de réduire les déchets liés à la fabrication.

L'invention vient à améliorer la situation en proposant un procédé d'adaptation d'un casque standard préexistant à la tête d'un utilisateur, le casque comprenant un dispositif optronique destiné à être placé devant les yeux de l'utilisateur, le procédé comprenant :
A) mesurer des dimensions de la tête de l'utilisateur ;
B) obtenir des dimensions du casque ;
C) définir un habillage pour le casque de façon à s'assurer du positionnement du dispositif optronique devant les yeux de l'utilisateur, l'habillage ayant une face supérieure étant destinée à être appliquée contre une face interne du casque et une face inférieure destinée à être appliquée contre la tête de l'utilisateur, l'habillage ayant une structure alvéolaire flexible, la fabrication de l'habillage étant adaptée aux dimensions de la tête et aux dimensions du casque ;
D) fabriquer l'habillage selon la définition définie à l'étape C) ; et
E) placer l'habillage à l'intérieur du casque.

L'habillage est défini de façon à comprendre plusieurs portions correspondant à des zones de la tête de l'utilisateur.

L'habillage est défini de façon à ce que des portions des plusieurs portions soient indépendantes et reliées par un ou plusieurs liens flexibles.

Dans un mode de réalisation, la fabrication à l'étape D) comprend fabriquer chaque portion à plat.

Dans un mode de réalisation, les portions comprennent au moins une portion à la nuque de l'utilisateur et une portion correspondant au sommet de la tête de l'utilisateur, la portion correspondant à la zone de la nuque de l'utilisateur ayant une structure alvéolaire avec une densité plus faible que la portion correspondant à la zone du sommet de la tête de l'utilisateur, la densité représentant le nombre d'alvéoles par unité de surface de l'habillage mis à plat.

Dans un mode de réalisation, la structure alvéolaire comprend des alvéoles traversantes de la face supérieure à la face inférieure.

Dans un mode de réalisation, la structure alvéolaire comprend un motif lattice.

Dans un mode de réalisation, une première zone de la structure alvéolaire et une deuxième zone sont définies, la première zone ayant un premier motif et la deuxième zone ayant un deuxième motif.

Dans un mode de réalisation, la structure alvéolaire a une densité non uniforme, la densité représentant le nombre d'alvéoles par unité de surface de l'habillage mis à plat.

Dans un mode de réalisation, l'habillage comprend plusieurs portions correspondant à des zones de la tête de l'utilisateur, la portion correspondant à la zone de la nuque de l'utilisateur ayant une structure alvéolaire avec une densité plus faible que la portion correspondant à la zone du sommet de la tête de l'utilisateur.

Dans un mode de réalisation, l'habillage comprend une première portion ayant une première épaisseur et une deuxième portion ayant une deuxième épaisseur.

Dans un mode de réalisation, l'habillage est fabriqué par fabrication additive.

Dans un mode de réalisation, le procédé comprenant également : mesurer des dimensions d'équipements placés à l'intérieur du casque et lors de l'étape C), l'habillage est adapté aux dimensions des équipements.

Dans un mode de réalisation la mesure des dimensions de la tête de l'utilisateur comprend une dimension d'une ou plusieurs zones de la tête.

Un autre aspect de la présente invention a pour objet un habillage obtenu par le procédé obtenu par les modes de réalisation décrits ci-dessus.

### BRÈVE DESCRIPTION DES DESSINS

L'invention sera mieux comprise et d'autres avantages apparaîtront à la lecture de la description qui va suivre donnée à titre non limitatif et grâce aux figures parmi lesquelles :
[Fig.1] la figure 1 illustre un exemple de procédé d'adaptation d'un casque à la tête un utilisateur;
[Fig. 2a] la figure 2a illustre une tête d'un utilisateur ;
[Fig. 2b] la figure 2b illustre un exemple de casque comprenant un dispositif optronique ;
[Fig. 3a] la figure 3a illustre un exemple d'habillage pour casque vu de dessus;
[Fig. 3b] la figure 3b illustre un exemple d'habillage pour casque vu de coté en coupe A-A ;
[Fig. 3c] la figure 3c illustre un autre exemple d'habillage pour casque vu de dessus;
[Fig. 3d] la figure 3d illustre deux autres exemples d'habillage pour casque vu de coté en coupe A-A ;
[Fig. 4a] la figure 4a illustre un exemple de structure alvéolaire ;
[Fig. 4b] la figure 4b illustre un autre exemple de structure alvéolaire ; et

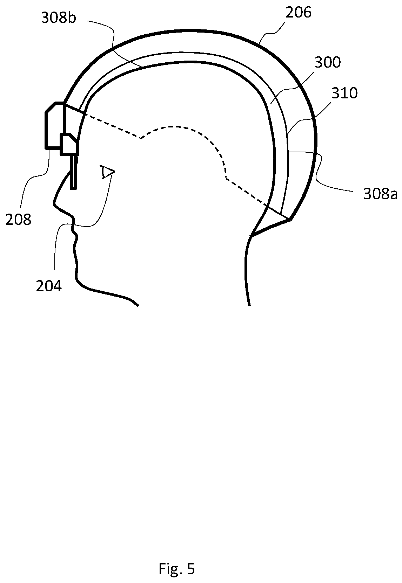

[Fig. 5] la figure 5 illustre un exemple de casque comprenant un habillage.

### DESCRIPTION DÉTAILLÉE

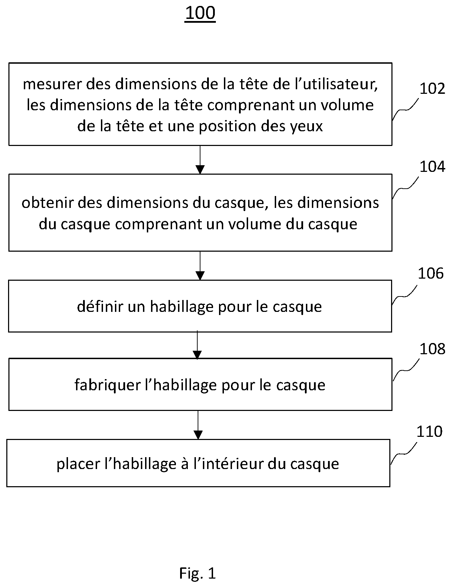

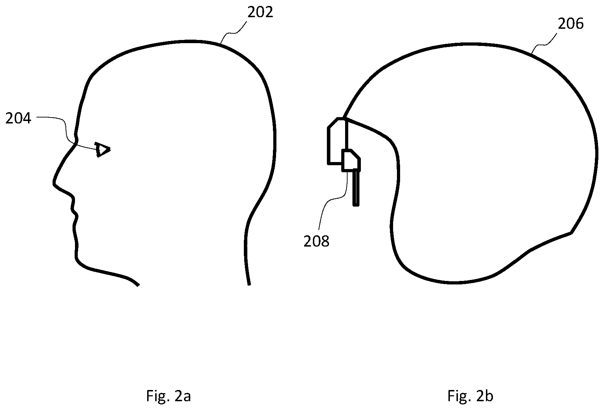

La figure 1 illustre un exemple de procédé d'adaptation 100 d'un casque standard préexistant 206 à la tête 202 d'un utilisateur Comme illustré dans la figure 2a et la figure 2b, le casque 206 comprend un dispositif optronique 208 destiné à être placé sur les yeux 204 de l'utilisateur lorsque le casque est porté par l'utilisateur. Le dispositif optronique 208 peut être par exemple un viseur de casque.. Le casque standard est défini selon une norme ou un standard adapté à un grand nombre d'utilisateurs. Par exemple, le casque 206 peut être un casque de taille standard (par exemple S, M ou L) sur lequel le dispositif optronique 208 est préalablement monté. Dans un exemple, la position du dispositif optronique 208 peut être réglable. La position peut être ajustée approximativement en plaçant le casque sur la tête de l'utilisateur, de façon à placer le dispositif 208 devant les yeux 204 de l'utilisateur.

A l'étape 102, le procédé 100 comprend : mesurer des dimensions de la tête de l'utilisateur. Par exemple, les dimensions de la tête peuvent comprendre un volume de la tête 202 représenté par des coordonnées spatiales de la surface de la tête et une position des yeux 204. Par exemple, un relevé tridimensionnel (scan 3D) de la tête 202 de l'utilisateur peut être réalisé à l'aide d'un scanner 3D. Le scan peut indiquer par exemple la position des pupilles lorsque l'œil est exposé à différentes intensités lumineuses. De plus, le scan 3D peut indiquer des dimensions telles que la surface de différentes zones de la tête 202, par exemple les tempes, le front, la nuque, le haut de la tête, etc.

A l'étape 104, le procédé 100 comprend : obtenir des dimensions du casque 206. Par exemple, les dimensions du casque peuvent être obtenues à l'issue de la conception du casque 206 (par conception assistée par ordinateur), ou mesurées a posteriori de la conception (par retro ingénierie), ou encore obtenues dans un manuel d'utilisation du casque standard. Dans un autre exemple, un scan 3D du casque peut être réalisé afin de déterminer ses dimensions. Les dimensions du casque 206 peuvent comprendre, par exemple, un volume du casque 206 représenté par des coordonnées spatiales de la face interne 310 du casque 206. La forme d'une face interne 310 du casque 206 peut être déterminée. Par exemple, l'épaisseur du casque 206 peut être uniforme ou peut comprendre des zones ayant des épaisseurs différentes. Dans un exemple, des dimensions du dispositif optronique 208 peuvent être mesurées, tels que la longueur ou largeur du dispositif 208, la position d'une partie du dispositif 208 destinée à être placée sur l'œil 204.

A l'étape 106, le procédé 100 comprend définir un habillage 300 pour le casque 206 de façon à s'assurer du positionnement du dispositif optronique devant les yeux de l'utilisateur, l'habillage 300 ayant une face supérieure 308a étant destinée à être appliquée contre la face interne 310 du casque 206 et une face inférieure 308b destinée à être appliquée contre la tête 202 de l'utilisateur, l'habillage 300 ayant une structure alvéolaire flexible, la fabrication de l'habillage 300 étant adaptée aux dimensions de la tête 202 et aux dimensions du casque 206. En particulier, les dimensions de la tête 202 et du casque 206 mesurées aux étapes 102 et 104 permettent de déterminer l'habillage 300 afin que le dispositif optronique 208 soit placé précisément devant les yeux 204 de l'utilisateur.

L'habillage 300 peut être défini en utilisant un logiciel de modélisation tridimensionnelle prenant en compte les dimensions de la tête mesurées à l'étape 102 et les dimensions du casque obtenues à l'étape 104.

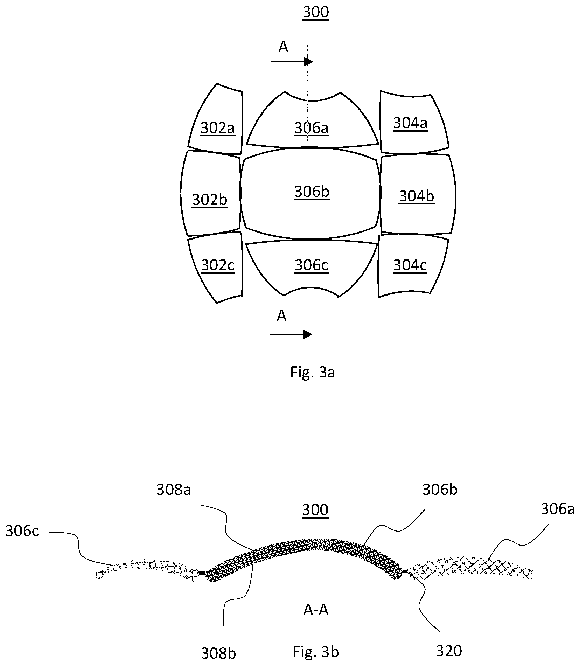

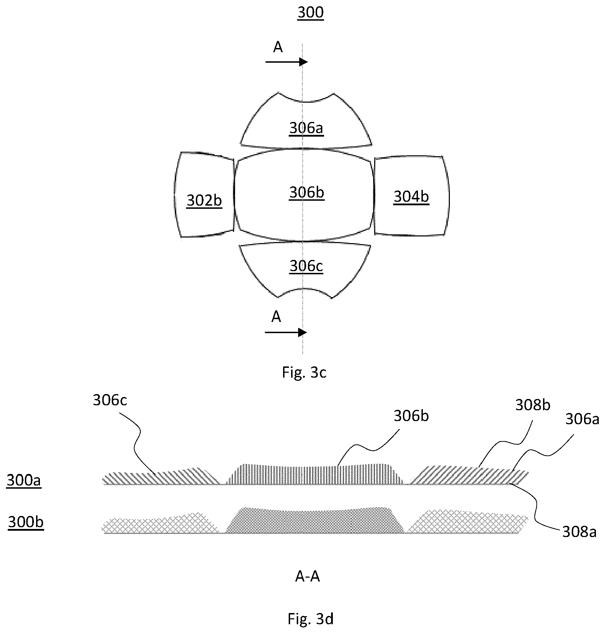

L'habillage 300 est défini de façon à comprendre plusieurs portions. Par exemple, comme illustré dans les figures 3a et 3b représentant des exemples d'habillage 300 pour casque 206 vu de face et de dessus, l'habillage 300 peut comprendre plusieurs portions 302a-306c correspondant à des zones de la tête 202 de l'utilisateur. Dans l'exemple de la Figure 3a, l'habillage 300 comprend neuf portions 302a-306c. Par exemple, les portions 302a, 302c peuvent correspondre aux tempes de l'utilisateur, la portion 302b peut correspondre au front de l'utilisateur, la portion 304b peut correspondre à la nuque de l'utilisateur, la partie 306b peut correspondre au dessus de la tête 202 et les portions 304a, 304c, 306a, 306c peuvent correspondre à différentes parties latérales de la tête 202. Les zones de la tête peuvent être définies par des coordonnées spatiales de la surface de la tête de l'utilisateur obtenues par exemple par un scan 3D de la tête à l'étape 102. Dans un autre exemple, comme illustré dans la figure 3c, l'habillage peut comprendre cinq portions 302b, 306a, 306b, 306c, 304b correspondant aux front, nuque, dessus de la tête et tempes de l'utilisateur.

L'habillage 300 est défini de façon à comprendre plusieurs portions, certaines portions étant reliées par un ou plusieurs liens flexibles. Comme illustré dans la figure 3b, des portions 302a-306c de l'habillage 300 sont reliées par des liens 320 permettant de relier plusieurs portions. Les liens 320 peuvent relier, par exemple, la portion 306a avec la portion 306b, la portion 306b avec la portion 306c, la portion 302a avec la portion 302b, la portion 302b avec la portion 302c, la portion 304a avec la portion 304b, la portion 304b avec la portion 304c. la portion 302b avec la portion 306b et la portion 306b avec la portion 304b. Dans un autre exemple, plusieurs liens 320 peuvent relier deux portions.

Comme illustré dans les figures 3a-3d, l'habillage 300 comprend différentes portions 302a-306c indépendantes. Ces portions sont avantageuses car elles permettent de fabriquer l'habillage à plat. En effet, dans ces exemples, les portions 302a-306c sont définies de façon à être détachées les unes des autres, permettant ainsi d'obtenir un habillage à plat qui peut être ensuite placé dans le casque 206 et d'adopter la forme de la face interne 310 du casque 206. En particulier, l'habillage 300 peut être fabriqué à plat, comme illustré dans la figure 3c (voir détails ci-dessous). La face supérieure 308a étant configurée pour être en contact avec la face interne 310 du casque 206 peut être à plat lors de la fabrication. Puis, grâce à la flexibilité de l'habillage 300 (engendrée par la structure alvéolaire flexible et aux liens flexibles 320) et aux différentes portions 302a-306c, l'habillage 300 peut être inséré à l'intérieur du casque 206, la forme de l'habillage 300 se conformant à la forme de la face interne 310 du casque 206. Dans un exemple, chaque portion 302a-306c peut être fabriquée séparément, puis les portions 302a-306c peuvent être assemblées pour former l'habillage 300. Par exemple, les portions 302a-306c détachées peuvent être définies de façon à ce que des alvéoles de la structure alvéolaire permettent l'emboitement des portions 302a-306c afin de les assembler pour former l'habillage 300. La fabrication de portions 302a-306c détachées permet d'imprimer les portions 302a-306c séparément et ainsi de faciliter leur fabrication (par impression 3D par exemple). Avantageusement, il est possible d'utiliser un moyen de fabrication de petite taille qui peut être transportable et moins coûteux qu'un moyen necessaire à la fabrication d'un habillage complet. Dans un autre exemple, les portions peuvent être définies de façon à être partiellement détachées les unes des autres.

Dans un autre exemple, les portions 302a-306c peuvent être définies de manière à ce que l'habillage 300 soit fabriqué directement avec la forme de la face interne 310 du casque 206. Par exemple, les portions 302a-306c peuvent être définies avec une forme correspondant à la face interne 310 du casque 206.

Afin d'ajuster la position du dispositif optronique 208 de façon à ce qu'il soit placé devant les yeux 202 de l'utilisateur, l'épaisseur des différentes portions 302a-306c peut être variée. Par exemple, l'épaisseur de la portion 306b correspondant au dessus de la tête 202 peut être plus élevée que celle de la portion 306a afin d'ajuster la position du dispositif 208. En plus de permettre au dispositif optronique 208 d'être ajusté de façon précise devant les yeux 204, varier l'épaisseur des différentes portions 302a-306c permet également d'adapter le confort de l'utilisateur, notamment lorsque le casque 206 est de taille standard. Par exemple, les portions 302a, 302c correspondant aux tempes de l'utilisateur peuvent avoir une épaisseur plus épaisse que la portion 306b correspondant au dessus de la tête 202 afin d'améliorer le confort du casque 206. Par exemple, l'épaisseur des différentes portions 302a-306c peut être comprise entre 1 mm et 20 mm. Dans un autre exemple, comme illustré dans la figure 3b, une même portion 302a-306c peut avoir différentes épaisseurs. Par exemple, chacune des portions 306a, 306b peut avoir différentes épaisseurs. Par exemple, l'épaisseur peut varier de façon graduelle dans une même portion 302a-306c.

Dans un exemple, la structure alvéolaire peut être définie avec une densité non uniforme, la densité représentant le nombre d'alvéoles par unité de surface de l'habillage mis à plat. Par exemple, la portion correspondant à la zone de la nuque de l'utilisateur peut voir une structure alvéolaire avec une densité plus élevée que la portion correspondant à la zone du sommet de la tête de l'utilisateur. Par exemple, chaque ou certaines portions 302a-306c de l'habillage 300 tel qu'illustré dans la figure 3a peuvent être définies avec une densité d'alvéoles différentes. Dans un autre exemple, la densité des alvéoles de l'habillage 300 peut être adaptée à différentes zones de la tête. Par exemple, une portion de l'habillage 300 correspondant à la zone de la nuque de l'utilisateur ayant une structure alvéolaire avec une densité plus élevée que la portion correspondant à la zone du sommet de la tête de l'utilisateur. Ainsi, en variant la densité des alvéoles, il est possible de varier la flexibilité de l'habillage. Plus la densité est faible, plus l'habillage 300 sera flexible. Ainsi, en diminuant la densité par exemple au niveau de la nuque, cela peut permettre à l'utilisateur de bouger sa tête 202 plus facilement (le mouvement de la tête entrainant une modification du volume du cou et la parole ou mastication entrainant une modification de la forme des tempes et/ou de la mâchoire). En particulier, la flexibilité de l'habillage 300 peut être une flexibilité engendrée par les parois verticales des alvéoles, permettant par exemple à l'habillage 300 d'être fabriqué à plat puis d'être inséré dans le casque 206. De plus, l'habillage peut être flexible verticalement, c'est-à-dire que l'habillage peut être comprimé entre les faces supérieures 308a et inférieures 308b. Par exemple, la superposition de plusieurs couches d'alvéoles peut faciliter une flexibilité verticale. Cela permet à l'utilisateur de bouger sa tête 202 plus facilement et d'insérer sa tête 202 dans le casque 206 plus facilement. Dans un autre exemple, une même portion 302a-306c peut avoir une densité d'alvéoles variable. Par exemple, la densité peut évoluer de façon graduelle dans une même portion 302a-306c.

Dans un exemple, le procédé 100 peut comprendre également mesurer des dimensions d'équipements placés à l'intérieur du casque 206 et lors de l'étape 106, la définition de l'habillage est adaptée aux dimensions des équipements. Par exemple, A l'étape 102, l'utilisateur peut porter des équipements tels qu'une cagoule anti-feu, un tissu de confort (par exemple habillage en mousse placé entre la tête de l'utilisateur et l'habillage 300 permettant d'améliorer le confort lors du port du casque), un masque, des lunettes etc. La mesure des dimensions de la tête de l'utilisateur peut ainsi être obtenue par un scan 3D de la tête et des équipements, indiquant par exemple le volume de la tête et des équipements. Dans un autre exemple, des équipements peuvent être placé dans le casque lors de l'étape 104. Par exemple, un casque audio ou un micro peuvent être intégrés au casque, et les dimensions du casque peuvent prendre en compte des dimensions des équipements.

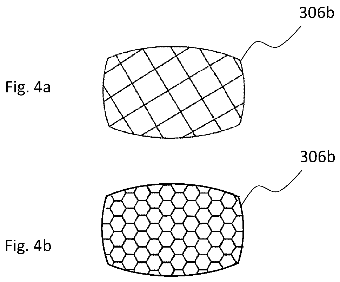

Comme illustré dans les figures 4a et 4b illustrant deux portions de l'habillage 300, la structure alvéolaire définie à l'étape 106 comprend des alvéoles formant un motif. Par exemple, le motif de la structure alvéolaire peut comprendre un motif lattice (tel qu'un treillis). Dans l'exemple de la figure 4a, un motif rectangulaire uniforme est utilisé (comprenant des alvéoles de forme rectangulaire). Dans l'exemple de la figure 4b, un motif nid d'abeille uniforme est utilisé (comprenant des alvéoles de forme nid d'abeille) Dans un autre exemple, un motif en v ou circulaire peut être utilisé. Dans un autre exemple, un motif non-uniforme peut être utilisé, c'est-à-dire comprenant des alvéoles de différentes tailles et/ou formes. Par exemple, dans un exemple, un motif comprenant des alvéoles rectangulaires et des alvéoles nid d'abeille peuvent être utilisées. Dans un exemple, lors de l'étape 106, la structure alvéolaire peut comprendre des alvéoles traversantes de la face supérieure 308a à la face inférieure 308b. Par exemple, comme illustré dans la figure 3c, les alvéoles rectangulaires de la portion 306b et les alvéoles parallélépipédiques peuvent être traversantes de la face supérieure 308a à la face inférieure 308b. Les alvéoles traversantes permettent d'avoir un habillage 300 flexible qui puisse être inséré et retiré facilement du casque 206, à l'utilisateur de bouger sa tête 202 et laisser la peau respirer. Dans un autre exemple, comme par exemple illustré dans les figures 3b et 3c représentant l'habillage 300 vu de côté, plusieurs couches d'alvéoles peuvent être définies les unes au-dessus des autres.

Dans un exemple, lors de l'étape 106, une première zone et une deuxième zone de la structure alvéolaire peuvent être définie, la première zone comprenant un premier motif et la deuxième zone comprenant un deuxième motif. Par exemple, la première zone et la deuxième zone peut correspondre à une portion 302a-306c indépendantes de l'habillage 300 comme illustré dans la figure 3a. Chaque portion 302a-306c peut être définie avec un motif différent (différent motif et/ou alvéoles de taille différente). Alternativement, certaines portions 302a-306c peuvent également comprendre le même motif tandis que d'autres portions 302a-306c peuvent comprendre un motif différent. Dans un autre exemple, la première zone et la deuxième zone peuvent correspondre à des zones de la tête telles que la nuque, les tempes ou le haut de la tête. Chaque zone de l'habillage 300 correspondant à une zone de la tête peut être définie avec un motif différent (différent motif et/ou alvéoles de taille différente). Alternativement, certaines zones de l'habillage 300 correspondant à une zone de la tête peuvent également comprendre le même motif tandis que d'autres zones peuvent comprendre un motif différent. Par exemple, la portion 302a peut être définie avec un motif nid d'abeille et la portion 302b peut être définie avec un motif circulaire. Comme illustré dans la figure 3c, la portion 306b peut avoir un motif rectangulaire et les portions 306a, 306c peuvent avoir un motif parallélépipédique. Dans un autre exemple, une même portion 302a-306c peut comprendre plusieurs zones, chaque zone comprenant des alvéoles différentes. Dans un autre exemple, les motifs différents peuvent correspondre à un même motif (par exemple nid d'abeille) ayant des tailles différentes. Par exemple, la taille du motif peut évoluer graduellement dans une même portion 302a-306c. Ainsi, l'adaptation du motif permet de varier la flexibilité de l'habillage 300 ainsi que le confort de l'utilisateur. En effet, des motifs différents permettent d'obtenir des flexibilités différentes qui peuvent par exemple faciliter le mouvement de la tête (par exemple au niveau de la nuque de l'utilisateur).

A l'étape 108, le procédé 100 comprend fabriquer l'habillage 300 selon la définition définie à l'étape 106. Comme mentionné ci-dessus, dans un exemple, la fabrication l'habillage 300 peut être réalisée à plat grâce à la définition de plusieurs portions 302a-306c à plat. L'habillage 300 peut être fabriqué par fabrication additive, par exemple par stéréo lithographie de matière à l'état liquide, frittage de poudre et fusion de matière en fil solide (par exemple par impression tridimensionnelle (3D)). L'habillage 300 peut être fabriqué en matériau élastomère. Par exemple, l'habillage 300 peut être fabriqué en nylon, en polyuréthane ou en polystyrène. Dans un exemple, différentes portions de l'habillage 300 peuvent être fabriquées dans différents matériaux. En particulier, il est possible d'utiliser des matériaux ayant une flexibilité différente, permettant d'améliorer le confort de l'utilisateur et lui permettre de bouger facilement sa tête recouverte par le casque 206 comprenant l'habillage 300. Dans un exemple, l'habillage 300 peut être fabriqué par fabrication additive faite à plat. Comme indiqué ci-dessus, l'habillage 300 peut comprendre plusieurs portions 302a-306b. Les portions 302a-306b permettent de fabriquer l'habillage 300 à plat. En effet, chaque portion peut-être par exemple fabriquée par impression 3D à plat, comme illustré dans la figure 3d. Chaque portion peut être fabriquée dans un matériau flexible. Puis, grâce à la flexibilité du matériau de l'habillage 300 et aux différentes portions 302a-306c, l'habillage peut être inséré à l'intérieur du casque et se conformer facilement à la face interne 310 du casque. Ainsi, en fabriquant les portions 302a-306c à plat, la fabrication est simplifiée et le temps de fabrication est réduit. En effet, il n'est pas nécessaire d'avoir une étape supplémentaire telle que la fabrication d'un support pour impression 3D ayant la forme du casque qu'il faudrait par la suite retirer une fois l'habillage fabriqué. Ainsi, cela permet également de limiter les déchets engendrés par la fabrication car il n'y a pas de matière supplémentaire à retirer. De plus, la fabrication à plat permet de fabriquer l'habillage 300 directement sur un support de l'imprimante, sans nécessiter de support de fabrication ayant la forme de l'habillage voulue (par exemple, un support ayant la forme de la face interne 310 du casque 206). Par exemple, en prenant l'exemple d'habillage de la figure 3d, la portion 306b correspondant au dessus de la tête peut être fabriquée en premier à plat par impression 3D sur le support de l'imprimante. Les liens 320 peuvent être fabriqués par impression 3D, permettant de relier la portion 306b aux autres portions 302b, 306a, 304b, 306b. Ces liens peuvent être des liens flexibles. Les liens peuvent être fabriqués avec un matériau flexible adapté à la fabrication 3D, par exemple en polymère (par exemple en nylon, en polyuréthane ou en polystyrène). L'habillage 300 et les liens 320 peuvent être fabriqués avec le même matériau ou avec un matériau différent. Chaque portion est ensuite fabriquée à plat par impression 3D autour de la portion 306b, la portion 306b restant immobile lors de la fabrication. Ainsi, l'ensemble des portions de l'habillage 300 peuvent être fabriquée à plat.

Dans un autre exemple, comme dans l'exemple de la figure 3b, l'habillage 300 peut être imprimé sur un support ayant la forme de la face interne 310 du casque 206. Par exemple, un support peut être préalablement obtenu pour chaque casque de taille standard (par exemple S, M ou L) et l'habillage peut être fabriqué sur le support correspondant au casque dans lequel l'habillage 300 sera inséré. Par exemple, le support peut être obtenu par moulage du casque standard. Cela permet de s'assurer que l'habillage 300, une fois à l'intérieur du casque 206, se conforme à la forme la face interne 310 du casque standard 206 utilisé.

Ces méthodes de fabrication permettent de réduire les déchets de matière par rapport à un usinage ou un moulage généralement utilisé lors de la fabrication de casque personnalisés. De plus, ces méthodes permettent de fabriquer de façon rapide un casque adapté à la tête d'un utilisateur à partir d'un casque existant.

A l'étape 110, le procédé 100 comprend placer l'habillage à l'intérieur du casque 206. Ainsi, l'utilisateur peut porter le casque avec le dispositif optronique 208 ajusté précisément à ses yeux grâce à l'habillage placé à l'intérieur du casque 206.

L'invention décrite ci-dessus permet à la fois d'obtenir un positionnement précis du dispositif optronique 208 sur les yeux de l'utilisateur, et donc un casque 206 immobile lorsqu'il est porté, et d'assurer un confort lors du port du casque, même pendant une durée prolongée. Ainsi, le procédé 100 décrit ci-dessus permet d'obtenir un équilibre entre la flexibilité et la rigidité de l'habillage 300 permettant le positionnement précis et le confort. De plus, les portions ainsi que la fabrication des portions à plat permettent de simplifier la fabrication, limiter le temps de fabrication et de limiter les déchets de fabrication.

Bien que l'invention ait été illustrée et décrite en détail à l'aide d'un mode de réalisation préféré, l'invention n'est pas limitée aux exemples divulgués. D'autres variantes peuvent être déduites par l'homme du métier sans sortir du cadre de protection de l'invention revendiquée. Par exemple, bien que les figures 4a et 4b illustrent des alvéoles nid d'abeille ou rectangulaires avec un motif uniforme, l'homme du métier comprendra qu'il existe de nombreux motifs permettant de varier les propriétés de l'habillage telles que la flexibilité et le confort. De plus, l'homme du métier comprendra que l'épaisseur, la densité des alvéoles et le motif peuvent être adaptées simultanément de façon à placer le dispositif optronique devant les yeux de l'utilisateur, mais aussi améliorer le confort et le mouvement de la tête. De plus, les figures 3a-3d illustrent des exemples de portions de l'habillage. Cependant, l'homme du métier comprendra qu'il existe d'autres exemples comprenant un nombre différent, des formes différentes et des configurations différentes de portions permettant d'adapter un casque à la tête d'un utilisateur.

## Revendications

1. Procédé d'adaptation (100) d'un casque standard préexistant (206) à la tête (202) d'un utilisateur, le casque comprenant un dispositif optronique (208) destiné à être placé devant les yeux (204) de l'utilisateur, le procédé comprenant :
A) mesurer des dimensions de la tête de l'utilisateur;
B) obtenir des dimensions du casque;
C) définir un habillage (300) pour le casque de façon à s'assurer du positionnement du dispositif optronique devant les yeux de l'utilisateur, l'habillage ayant une face supérieure (308a) étant destinée à être appliquée contre une face interne (310) du casque et une face inférieure (308b) destinée à être appliquée contre la tête de l'utilisateur, l'habillage ayant une structure alvéolaire flexible, la fabrication de l'habillage étant adaptée aux dimensions de la tête et aux dimensions du casque, l'habillage étant défini de façon à comprendre plusieurs portions (302a, 302b, 302c, 304a, 304b, 304c, 306a, 306b, 306c) correspondant à des zones de la tête de l'utilisateur, des portions des plusieurs portions étant indépendantes et reliées par un ou plusieurs liens flexibles;
D) fabriquer l'habillage selon la définition définie à l'étape C) ; et
E) placer l'habillage à l'intérieur du casque.

2. Procédé d'adaptation selon la des revendication 1, dans lequel la fabrication à l'étape D) comprend fabriquer chaque portion à plat.

3. Procédé d'adaptation selon l'une des revendications précédentes, dans lequel la structure alvéolaire a une densité non uniforme, la densité représentant le nombre d'alvéoles par unité de surface de l'habillage mis à plat.

4. Procédé d'adaptation selon l'une des revendications précédentes , dans lequel les portions comprennent au moins une portion correspondant à la nuque de l'utilisateur et une portion correspondant au sommet de la tête de l'utilisateur, la portion correspondant à la zone de la nuque de l'utilisateur ayant une structure alvéolaire avec une densité plus faible que la portion correspondant à la zone du sommet de la tête de l'utilisateur, la densité représentant le nombre d'alvéoles par unité de surface de l'habillage mis à plat.

5. Procédé d'adaptation selon l'une des revendications précédentes, dans lequel l'habillage est fabriqué par fabrication additive.

6. Procédé d'adaptation selon l'une des revendications précédentes, l'habillage comprend une première portion ayant une première épaisseur et une deuxième portion ayant une deuxième épaisseur.

7. Procédé d'adaptation selon l'une des revendications précédentes, dans lequel lors de l'étape C), la structure alvéolaire comprend des alvéoles traversantes de la face supérieure à la face inférieure.

8. Procédé d'adaptation selon l'une des revendications précédentes, dans lequel lors de l'étape C), la structure alvéolaire comprend un motif lattice.

9. Procédé d'adaptation selon l'une des revendications précédentes, dans lequel lors de l'étape C), une première zone de la structure alvéolaire et une deuxième zone sont définies, la première zone ayant un premier motif et la deuxième zone ayant un deuxième motif.

10. Procédé d'adaptation selon l'une des revendications précédentes, le procédé comprenant également : mesurer des dimensions d'équipements placés à l'intérieur du casque et lors de l'étape C), la définition de l'habillage est adaptée aux dimensions des équipements.

11. Procédé d'adaptation selon l'une des revendications précédentes, dans lequel la mesure des dimensions de la tête de l'utilisateur comprend une dimension d'une ou plusieurs zones de la tête.

## Patentansprüche

1. Verfahren zur Anpassung (100) eines bereits bestehenden Standardhelms (206) an den Kopf (202) eines Benutzers, wobei der Helm eine optronische Vorrichtung (208) umfasst, die dazu vorgesehen ist, vor den Augen (204) des Benutzers platziert zu werden, wobei das Verfahren umfasst:
A) Messen der Dimensionen des Kopfes des Benutzers;
B) Erhalten der Dimensionen des Helms;
C) Definieren einer Verkleidung (300) für den Helm derart, dass die Positionierung der optronischen Vorrichtung vor den Augen des Benutzers gewährleistet wird, wobei die Verkleidung eine obere Seite (308a) umfasst, die dazu vorgesehen ist, an einer unteren Seite (310) des Helms angelegt zu werden, und eine untere Seite (308b), die dazu vorgesehen ist, am Kopf des Benutzers angelegt zu werden, wobei die Verkleidung eine flexible Schaumstoffstruktur aufweist, wobei die Herstellung der Verkleidung an den Dimensionen des Kopfes und an den Dimensionen des Helms angepasst ist, wobei die Verkleidung derart definiert ist, dass sie mehrere Abschnitte (302a, 302b, 302c, 304a, 304b, 304c, 306a, 306b, 306c) umfasst, die Bereichen des Kopfes des Benutzers entsprechen, wobei Abschnitte der mehreren Abschnitte unabhängig sind und durch eine oder mehrere flexible Verbindungen verbunden sind;
D) Herstellen der Verkleidung gemäß der in Schritt C) definierten Definition; und
E) Platzieren der Verkleidung im Inneren des Helms.

2. Verfahren zur Anpassung nach Anspruch 1, wobei die Herstellung im Schritt D) die Herstellung jedes flachen Abschnitts umfasst.

3. Verfahren zur Anpassung nach einem der vorstehenden Ansprüche, wobei die Schaumstoffstruktur eine ungleichförmige Dichte aufweist, wobei die Dichte die Anzahl von Alveolen pro Oberflächeneinheit der flachgelegten Verkleidung darstellt.

4. Verfahren zur Anpassung nach einem der vorstehenden Ansprüche, wobei die Abschnitte mindestens einen Abschnitt umfassen, der dem Nacken des Benutzers entspricht, und einen Abschnitt, der dem Scheitel des Kopfes des Benutzers entspricht, wobei der Abschnitt, der dem Bereich des Nackens des Benutzers entspricht, eine Schaumstoffstruktur mit einer geringeren Dichte aufweist als der Abschnitt, der dem Bereich des Scheitels des Kopfes des Benutzers entspricht, wobei die Dichte die Anzahl von Alveolen pro Oberflächeneinheit der flachgelegten Verkleidung darstellt.

5. Verfahren zur Anpassung nach einem der vorstehenden Ansprüche, wobei die Verkleidung durch additive Herstellung hergestellt wird.

6. Verfahren zur Anpassung nach einem der vorstehenden Ansprüche, wobei die Verkleidung einen ersten Abschnitt umfasst, der eine erste Dichte aufweist, und einen zweiten Abschnitt, der eine zweite Dichte aufweist.

7. Verfahren zur Anpassung nach einem der vorstehenden Ansprüche, wobei die Schaumstoffstruktur beim Schritt C) Alveolen umfasst, die von der oberen Seite zur unteren Seite durchgehend sind.

8. Verfahren zur Anpassung nach einem der vorstehenden Ansprüche, wobei die Schaumstoffstruktur beim Schritt C) ein Gittermuster umfasst.

9. Verfahren zur Anpassung nach einem der vorstehenden Ansprüche, wobei beim Schritt C) ein erster Bereich der Schaumstoffstruktur und ein zweiter Bereich definiert werden, wobei der erste Bereich ein erstes Muster aufweist und der zweite Bereich ein zweites Muster aufweist.

10. Verfahren zur Anpassung nach einem der vorstehenden Ansprüche, wobei das Verfahren ebenfalls Folgendes umfasst: Messen von Dimensionen von Ausrüstungen, die im Inneren des Helms platziert werden, und beim Schritt C), Anpassen der Definition der Verkleidung an den Dimensionen der Ausrüstungen.

11. Verfahren zur Anpassung nach einem der vorstehenden Ansprüche, wobei die Messung der Dimensionen des Kopfes des Benutzers eine Dimension eines oder mehrerer Bereiche des Kopfes umfasst.

## Claims

1. Method (100) for adapting a pre-existing standard helmet (206) to the head (202) of a user, the helmet comprising an optronic device (208) intended to be placed in front of the eyes (204) of the user, the method comprising:
A) measuring dimensions of the head of the user;
B) obtaining dimensions of the helmet;
C) defining a covering (300) for the helmet, so as to ensure the positioning of the optronic device in front of the eyes of the user, the covering having an upper face (308a) being intended to be applied against an internal face (310) of the helmet and a lower face (308b) intended to be applied against the head of the user, the covering having a flexible honeycomb structure, the manufacturing of the covering being adapted to the dimensions of the head and to the dimensions of the helmet, the covering being defined so as to comprise several portions (302a, 302b, 302c, 304a, 304b, 304c, 306a, 306b, 306c) corresponding to zones of the head of the user, portions of the several portions being independent and connected by one or more flexible links;
D) manufacturing the covering according to the definition defined in step C); and
E) placing the covering inside the helmet.

2. Adaptation method according to claim 1, wherein the manufacturing in step D) comprises manufacturing each portion flat.

3. Adaptation method according to any one of the preceding claims, wherein the honeycomb structure has a non-uniform density, the density representing the number of air cells per surface unit of the flat covering.

4. Adaptation method according to any one of the preceding claims, wherein the portions comprise at least one portion corresponding to the nape of the user and one portion corresponding to the apex of the head of the user, the portion corresponding to the zone of the nape of the user having a honeycomb structure with a density lower than the portion corresponding to the zone of the apex of the head of the user, the density representing the number of air cells per surface unit of the flat covering.

5. Adaptation method according to any one of the preceding claims, wherein the covering is manufactured by additive manufacture.

6. Adaptation method according to any one of the preceding claims, the covering comprises a first portion having a first thickness and a second portion having a second thickness.

7. Adaptation method according to any one of the preceding claims, wherein during step C), the honeycomb structure comprises through air cells from the upper face to the lower face.

8. Adaptation method according to any one of the preceding claims, wherein during step C), the honeycomb structure comprises a lattice pattern.

9. Adaptation method according to any one of the preceding claims, wherein during step C), a first zone of the honeycomb structure and a second zone are defined, the first zone having a first pattern and the second zone having a second pattern.

10. Adaptation method according to any one of the preceding claims, the method also comprising: measuring dimensions of equipment placed inside the helmet and during step C), the definition of the covering is adapted to the dimensions of the equipment.

11. Adaptation method according to any one of the preceding claims, wherein the measuring of the dimensions of the head of the user comprises a dimension of one or more zones of the head.
